# EUROPEAN PATENT APPLICATION

(11) **EP 3 562 101 A1**
(43) Date of publication of application: **30.10.2019**
(21) Application number: 17885326.3
(22) Date of filing: 18.12.2017
(51) Int. Cl.: H04L 12/28

(54) **BRAS MANAGEMENT METHOD, PACKET FORWARDING METHOD, PACKET FORWARDING CONTROLLER, AND BRAS**

(30) Priority: 21.12.2016 CN 201710524022
(71) Applicant: ZTE Corporation, Shenzhen, Guangdong 518057 (CN)
(72) Inventor: ZHENG, Kun, Shenzhen Guangdong 518057 (CN)
(74) Representative: Regimbeau
(86) International application number: PCT/CN2017/116963
(87) International publication number: WO 2018/113630

(57) **Abstract**

Disclosed in the present application are a BRAS management method, a packet forwarding method, a packet forwarding controller, a BRAS, and a computer storage medium. The method comprises: obtaining information about a physical interface of each BRAS in a BRAS pool, and binding the physical interface of each BRAS to a preset floating interface; when access request packets sent by more than one BRAS in the BRAS pool, selecting a target BRAS from the more than one BRAS according to a first preset policy, and using a target physical interface of the target BRAS as an access physical interface of a user; and determining a target floating interface bound to the target physical interface, generating a forwarding table associated with the target floating interface, and sending, to the target BRAS, an access response packet of the forwarding table.

## Description

### CROSS-REFERENCE TO RELATED APPLICATIONS

The present application is filed based upon and claims benefit of Chinese Patent Application No. 201710524022.1, filed on December 21, 2016, the contents of which are hereby incorporated by reference in its entirety.

### TECHNICAL FIELD

The application relates to the field of communication, and particularly to a BRAS management method, a message forwarding method, a message forwarding controller, a BRAS and a computer storage medium.

### BACKGROUND

Broadband Remote Access Server, which is also called BRAS, is an access gateway for broadband network applications. As a bridge between a broadband access network and a backbone network, it provides basic access means and a management function for the broadband access network. The BRAS is located on an edge of a network, provides broadband access services, and implements convergence and forwarding of multiple services. It can meet requirements of different users on transmission capacity and bandwidth utilization. Therefore, the BRAS is a core device for broadband user access. The BRAS authenticates an access user at first, allows the user to access a broadband network if the authentication succeeds, and refuses access of the user if the authentication fails.

As a gateway for broadband services, the BRAS is located on an edge of a metropolitan area network. For ensuring carrier-class reliability, master and standby BRAS devices are usually deployed to implement 1:1 or 1+1 backup. When a 1:1 backup is implemented, only the master BRAS device may perform broadband service processing and data traffic forwarding, and the standby BRAS device is idle, so that there may exist a waste of processing performance. In case of a 1+1 backup, the master and standby BRAS devices may be interchanged for load sharing, which solves the problem of device idleness to a certain extent. However, a load sharing strategy is set according to a Virtual Local Area Network, called VLAN, and non-uniform VLAN division for a user may bring the problem of non-uniform load sharing of the BRAS devices.

In addition, due to existence of the foregoing problems, pool-based management may not be implemented for BRAS devices, and reliable traffic forwarding and load sharing may not be maximally implemented.

### SUMMARY

In order to solve the foregoing technical problems, embodiments of the application provide a BRAS management method, a message forwarding method, a message forwarding controller, a BRAS and a computer storage medium.

An embodiment of the application provides a BRAS management method, which includes the following operations.

Responsive to receiving access request messages sent by more than one BRAS in a BRAS pool, a target BRAS is selected from the more than one BRAS according to a first preset strategy, and a target physical interface of the target BRAS is determined as an access physical interface for a user.

A target floating interface bound with the target physical interface is determined, a forwarding table associated with the target floating interface is generated, and an access response message containing the forwarding table is sent to the target BRAS.

In the embodiment of the application, the method may further include the following operation.

Information of a physical interface of each BRAS in the BRAS pool is acquired, and the physical interface of each BRAS is bound with a respective preset floating interface.

In the embodiment of the application, the operation that the information of the physical interface of each BRAS in the BRAS pool is acquired may include the following operation.

The information of the physical interface is received from each BRAS in the BRAS pool, wherein the BRAS pool includes more than one BRAS, each BRAS has a physical interface, and the information of the physical interface includes: an interface name, an interface MAC address, an interface status and an interface rate.

In the embodiment of the application, before the operation that the physical interface of each BRAS is bound with the respective preset floating interface, the method may further include the following operation.

More than one floating interface is configured, wherein configuration information of the floating interface includes: an interface name, description information, an interface MAC address and a gateway IP address.

In the embodiment of the application, the operation that the physical interface of each BRAS is bound with the respective preset floating interface may include the following operations.

A physical interface on which a binding operation is to be performed in the BRAS pool is determined, and floating interfaces in an unbound state are queried.

One or more floating interfaces are selected from the floating interfaces in the unbound state, and the selected one or more floating interfaces are bound with the physical interface on which the binding operation is to be performed.

In the embodiment of the application, after the operation that the physical interface of each BRAS is bound with the respective preset floating interface, the method may further include the following operation.

A binding relationship between the physical interface of each BRAS and the floating interface is stored, and the binding relationship between the physical interface of the BRAS and the floating interface is sent to the BRAS for storage.

In the embodiment of the application, the operation that the target BRAS is selected from the more than one BRAS according to the first preset strategy may include the following operation.

The target BRAS is selected from the more than one BRAS according to at least one of the following strategies.

The BRAS corresponding to a first received access request message is determined as the target BRAS.

The BRAS with a minimum number of users in the more than one BRAS is determined as the target BRAS.

The BRAS with a maximum remaining memory in the more than one BRAS is determined as the target BRAS.

The BRAS with a minimum processor utilization in the more than one BRAS is determined as the target BRAS.

In the embodiment of the application, the operation that the target floating interface bound with the target physical interface is determined may include the following operations.

The floating interface bound with the target physical interface is queried.

If one floating interface is bound with the target physical interface, the floating interface bound with the target physical interface is determined as the target floating interface.

If multiple floating interfaces are bound with the target physical interface, the target floating interface is selected from the multiple floating interfaces according to a second preset strategy.

In the embodiment of the application, the operation that the target floating interface is selected from the multiple floating interfaces according to the second preset strategy may include the following operation.

The floating interface with a minimum number of users in the multiple floating interfaces is determined as the target floating interface.

An embodiment of the application provides a message forwarding method, which includes the following operations.

A first physical interface is determined according to a destination MAC address of a received message to be forwarded.

Whether an output interface is a floating interface or not is determined according to the message to be forwarded and the first physical interface.

In the case that the output interface is a floating interface, the message to be forwarded is sent according to a second physical interface in a binding relationship with the output interface.

In the embodiment of the application, the operation that the first physical interface is determined according to the destination MAC address of the received message to be forwarded may include the following operations.

A floating interface is determined according to the destination MAC address of the received message to be forwarded.

The first physical interface is determined according to a binding relationship between the floating interface and a physical interface.

In the embodiment of the application, the method may further include the following operation.

In the case that the output interface is a network-side physical interface, the message to be forwarded is directly sent from the network-side physical interface.

In the embodiment of the application, the method may further include the following operation.

In the case that no floating interface is determined according to the destination MAC address, the message to be forwarded is discarded.

In the embodiment of the application, the operation that whether the output interface is a floating interface or not is determined according to the message to be forwarded and the first physical interface may include the following operation.

A forwarding table is searched to determine whether the output interface is a floating interface or not according to a destination IP of the message to be forwarded and the first physical interface.

In the embodiment of the application, the forwarding table may include a user table and a route table, and the method may further include the following operations.

In the case that the floating interface is determined according to the destination MAC address,

BRAS service processing is performed on the message to be forwarded according to the user table.

After BRAS service processing is performed on the message to be forwarded, a header of Layer 2 protocol of the message to be forwarded is removed, and an output interface for the message to be forwarded is queried according to the route table.

Another embodiment of the application provides a BRAS management method, which includes the following operations.

One or more orchestration strategies are configured for a BRAS, configuration information of the orchestration strategy including: a migration triggering condition and a migration process.

Responsive to detecting that a first BRAS in a BRAS pool meets the migration triggering condition, a user of the first BRAS is migrated to a second BRAS in the BRAS pool based on the migration process.

In the embodiment of the application, the orchestration strategies may include at least one of: a first orchestration strategy, a second orchestration strategy or a third orchestration strategy.

A migration triggering condition of the first orchestration strategy may be that BRAS migration is triggered when the BRAS is in an unavailable state.

A migration triggering condition of the second orchestration strategy may be that BRAS migration is triggered based on a manual operation.

A migration triggering condition of the third orchestration strategy may be that BRAS migration is triggered when a preset time is elapsed.

In the embodiment of the application, the operation that the user of the first BRAS is migrated to the second BRAS in the BRAS pool based on the migration process may include the following operations.

A physical interface of the first BRAS is queried as a first physical interface, a target floating interface bound with the first physical interface is queried as a first floating interface, and a forwarding table associated with the first floating interface is queried.

The locally stored first physical interface and a binding relationship between the first physical interface and the first floating interface are deleted.

A physical interface of the second BRAS is queried as a second physical interface.

The second physical interface is bound with the first floating interface.

A binding relationship between the second physical interface and the first floating interface is sent to the second BRAS, and the forwarding table associated with the first floating interface is sent to the second BRAS.

In the embodiment of the application, the operation that the user of the first BRAS is migrated to the second BRAS in the BRAS pool based on the migration process may include the following operations.

A physical interface of the first BRAS is queried as a first physical interface, a target floating interface bound with the first physical interface is queried as a first floating interface, and a forwarding table associated with the first floating interface is queried.

The first BRAS is controlled to recover the locally stored forwarding table associated with the first floating interface, and the first BRAS is controlled to recover the locally stored first floating interface.

A physical interface of the second BRAS is queried as a second physical interface.

The second physical interface is bound with the first floating interface.

A binding relationship between the second physical interface and the first floating interface is sent to the second BRAS, and the forwarding table associated with the first floating interface is sent to the second BRAS.

An embodiment of the application provides a message forwarding controller, which includes an access control module, a strategy control module and a forwarding table module.

The access control module is configured to, responsive to receiving access request messages sent by more than one BRAS in a BRAS pool, select a target BRAS from the more than one BRAS according to a first preset strategy, determine a target physical interface of the target BRAS as an access physical interface for a user, and notify the access physical interface for the user to the strategy control module.

The strategy control module is configured to determine a target floating interface bound with the target physical interface and notify the forwarding table module to generate a forwarding table associated with the target floating interface.

The forwarding table module is configured to generate the forwarding table associated with the target floating interface.

The access control module is configured to send an access response message containing the forwarding table to the target BRAS.

In the embodiment of the application, the controller may further include a BRAS pool physical interface management module and a floating interface management module.

The BRAS pool physical interface management module may be configured to acquire information of a physical interface of each BRAS in the BRAS pool.

The floating interface management module may be configured to configure floating interfaces and record a binding relationship between a physical interface and a floating interface.

The strategy control module may be configured to bind the physical interface of each BRAS with a respective preset floating interface and notify the binding relationship between the physical interface and the floating interface to the floating interface management module.

In the embodiment of the application, the BRAS pool physical interface management module may be configured to receive the information of the physical interface from each BRAS in the BRAS pool, the BRAS pool including more than one BRAS, each BRAS having a physical interface and the information of the physical interface including: an interface name, an interface MAC address, an interface status and an interface rate.

In the embodiment of the application, the floating interface management module may be configured to configure more than one floating interface, wherein configuration information of the floating interface includes: an interface name, description information, an interface MAC address and a gateway IP address.

In the embodiment of the application, the strategy control module may be configured to: determine a physical interface on which a binding operation is to be performed in the BRAS pool in the BRAS pool physical interface management module; query floating interfaces in an unbound state in the floating interface management module; select one or more floating interfaces from the floating interfaces in the unbound state, and bind the selected one or more floating interfaces with the physical interface on which the binding operation is to be performed.

In the embodiment of the application, the floating interface management module may be configured to send a binding relationship between the physical interface of each BRAS and the floating interface to the BRAS for storage.

In the embodiment of the application, the access control module may be configured to select the target BRAS from the more than one BRAS according to at least one of the following strategies.

The BRAS corresponding to a first received access request message is determined as the target BRAS.

The BRAS with a minimum number of users in the more than one BRAS is determined as the target BRAS.

The BRAS with a maximum remaining memory in the more than one BRAS is determined as the target BRAS.

The BRAS with a minimum processor utilization in the more than one BRAS is determined as the target BRAS.

In the embodiment of the application, the floating interface management module may be configured to: query the floating interface bound with the target physical interface; in the case that one floating interface is bound with the target physical interface, determine the floating interface bound with the target physical interface as the target floating interface; in the case that multiple floating interfaces are bound with the target physical interface, select the target floating interface from the multiple floating interfaces according to a second preset strategy; and notify the target floating interface to the strategy control module.

In the embodiment of the application, the floating interface management module may be configured to determine the floating interface with a minimum number of users in the multiple floating interfaces as the target floating interface.

An embodiment of the application provides a BRAS, which includes a physical interface module, a floating interface module and a forwarding table module.

The physical interface module is configured to receive a message to be forwarded through a physical interface and send the message to be forwarded to the floating interface module.

The floating interface module is configured to determine a first physical interface according to a destination MAC address of the received message to be forwarded.

The forwarding table module is configured to determine whether an output interface is a floating interface or not according to the message to be forwarded and the first physical interface.

The floating interface module is configured to, in the case that the output interface is a floating interface, determine a second physical interface in a binding relationship with the output interface.

The physical interface module is configured to send the message to be forwarded by use of the second physical interface in the binding relationship with the output interface.

In the embodiment of the application, the floating interface module may be configured to determine a floating interface according to the destination MAC address of the received message to be forwarded and determine the first physical interface according to a binding relationship between the floating interface and a physical interface.

In the embodiment of the application, the forwarding table module may be configured to, in the case that the output interface is a network-side physical interface, directly send the message to be forwarded from the network-side physical interface.

In the embodiment of the application, the floating interface module may be configured to, in the case that no floating interface is determined according to the destination MAC address, discard the message to be forwarded.

In the embodiment of the application, the forwarding table module may be configured to search a forwarding table to determine whether the output interface is a floating interface or not according to a destination IP of the message to be forwarded and the first physical interface.

In the embodiment of the application, the forwarding table may include a user table and a route table, and in the case that the floating interface is determined according to the destination MAC address,
the forwarding table module may be configured to perform BRAS service processing on the message to be forwarded according to the user table and, after BRAS service processing is performed on the message to be forwarded, remove a header of Layer 2 protocol of the message to be forwarded and query an output interface for the message to be forwarded according to the route table.

An embodiment of the application provides a message forwarding controller, which includes a strategy control module.

The strategy control module is configured to: configure one or more orchestration strategies for a BRAS, wherein configuration information of the orchestration strategy includes: a migration triggering condition and a migration process; and responsive to detecting that a first BRAS in a BRAS pool meets the migration triggering condition, migrate a user of the first BRAS to a second BRAS in the BRAS pool based on the migration process.

In the embodiment of the application, the orchestration strategies may include at least one of: a first orchestration strategy, a second orchestration strategy or a third orchestration strategy.

A migration triggering condition of the first orchestration strategy may be that BRAS migration is triggered when the BRAS is in an unavailable state.

A migration triggering condition of the second orchestration strategy may be that BRAS migration is triggered based on a manual operation.

A migration triggering condition of the third orchestration strategy may be that BRAS migration is triggered when a preset time is elapsed.

In the embodiment of the application, the controller may further include a BRAS pool physical interface management module, a floating interface management module and a forwarding table module.

The BRAS pool physical interface management module may be configured to store information of a physical interface of each BRAS in the BRAS pool.

The floating interface management module may be configured to record a binding relationship between a physical interface and a floating interface, and may further be configured to send a binding relationship between a second physical interface and a first floating interface to the second BRAS.

The forwarding table module may be configured to store a forwarding table associated with a target floating interface.

The strategy control module may be configured to: query, in the BRAS pool physical interface management module, a physical interface of the first BRAS as a first physical interface; query, in the floating interface management module, the target floating interface bound with the first physical interface as the first floating interface; query the forwarding table associated with the first floating interface in the forwarding table module; delete the first physical interface in the BRAS pool physical interface management module; delete a binding relationship between the first physical interface and the first floating interface in the floating interface management module; query, in the BRAS pool physical interface management module, a physical interface of the second BRAS as the second physical interface; bind the second physical interface with the first floating interface; notify the binding relationship between the second physical interface and the first floating interface to the floating interface management module; and notify the forwarding table module to send the forwarding table associated with the first floating interface to the second BRAS.

In the embodiment of the application, the controller may further include a BRAS pool physical interface management module, a floating interface management module and a forwarding table module.

The BRAS pool physical interface management module may be configured to store information of a physical interface of each BRAS in the BRAS pool.

The floating interface management module may be configured to record a binding relationship between a physical interface and a floating interface, may further be configured to send a binding relationship between a second physical interface and a first floating interface to the second BRAS, and may further be configured to send the binding relationship between the second physical interface and the first floating interface to the second BRAS.

The forwarding table module may be configured to store a forwarding table associated with a target floating interface.

The strategy control module may be configured to: query, in the BRAS pool physical interface management module, a physical interface of the first BRAS as a first physical interface; query, in the floating interface management module, the target floating interface bound with the first physical interface as the first floating interface; query the forwarding table associated with the first floating interface in the forwarding table module; control the first BRAS to recover the locally stored forwarding table associated with the first floating interface; control the first BRAS to recover the locally stored first floating interface; query, in the BRAS pool physical interface management module, a physical interface of the second BRAS as the second physical interface; bind the second physical interface with the first floating interface; notify the binding relationship between the second physical interface and the first floating interface to the floating interface management module; and notify the forwarding table module to send the forwarding table associated with the first floating interface to the second BRAS.

An embodiment of the application provides a computer storage medium having stored therein a computer program, the computer program being configured to execute the BRAS management method or the message forwarding method.

According to the technical solutions of the embodiments of the application, multiple BRASs are interconnected and pooled to form the BRAS pool; and online users are managed by the message forwarding controller outside the BRAS pool through customized floating interfaces. Herein, interconnecting and pooling the multiple BRASs has the advantage that loads (i.e., the online users) may optimally be balanced to different BRASs according to a strategy; and adopting the floating interfaces has the advantages that multiple customized strategies may be adopted to orchestrate and manage the BRASs for load handover, more convenience is brought to operation and maintenance and relatively few resources may be consumed according to a load condition.

### BRIEF DESCRIPTION OF DRAWINGS

The drawings illustrate generally, by way of example, but not by way of limitation, various embodiments discussed in the invention.
FIG. 1 is a first composition diagram of a forwarding system according to an embodiment of the application.
FIG. 2 is a second composition diagram of a forwarding system according to an embodiment of the application.
FIG. 3 is a flowchart of an access and forwarding according to an embodiment of the application.
FIG. 4 is a flowchart of configuring a forwarding system according to an embodiment of the application.
FIG. 5 is a flowchart of accessing each BRAS in a BRAS pool according to an embodiment of the application.
FIG. 6 is a flowchart of forwarding a message by use of a BRAS according to an embodiment of the application.
FIG. 7 is a flowchart of orchestrating and managing BRASs according to an embodiment of the application.
FIG. 8 is a schematic diagram of a BRAS-unavailable migration process according to an embodiment of the application.
FIG. 9 is a schematic diagram of a manual migration process according to an embodiment of the application.
FIG. 10 is a schematic diagram of a time-based migration process according to an embodiment of the application.
FIG. 11 is a network diagram of a user access deployment using a PPPoE according to an embodiment of the application.
FIG. 12 is a schematic diagram of an access process of a PPPoE client according to an embodiment of the application.
FIG. 13 is a schematic diagram of a message forwarding process of a PPPoE client according to an embodiment of the application.
FIG. 14 is a schematic diagram of a BRAS 1-unavailable user migration process according to an embodiment of the application.

### DETAILED DESCRIPTION

In order to make the characteristics and technical contents of the embodiments of the application understood in more detail, implementation of the embodiments of the application will be described below in combination with the drawings in detail. The appended drawings are for illustrative purposes only and not intended to limit the embodiments of the application.

Key terms related to the embodiments of the application will be explained and described below.

Simple Network Management Protocol, which is also called SNMP: it is a Transmission Control Protocol/Internet Protocol, called TCP/IP, family-based network management standard as well as a standard protocol for managing network nodes (for example, servers, workstations, routers and switches) in an IP network. The SNMP may enable a network manager to improve network management efficiency, timely discover and solve network problems and plan network growth. The network manager may also receive a notification message, alarm event report and the like of a network node to learn about the network problems through the SNMP.

Network configuration protocol, which is also called NETCONF: a simple mechanism is defined to manage and configure devices, and configurations and the like may be retrieved from the devices. The NETCONF codes configuration data and protocol messages through an Extensible Markup Language, called XML.

Remote Authentication Dial In User Service, which is also called RADIUS: RADIUS is an Authentication, Authorization, Accounting, called AAA, protocol that is applied most extensively at present. RADIUS is a protocol for a Client/Server architecture which is also called C/S architecture, a client thereof is initially a Net Access Server, which is also called NAS, and any computer running RADIUS client software may become a client of RADIUS. A RADIUS protocol authentication mechanism is flexible, and multiple manners such as a Password Authentication Protocol which is also called PAP, a Challenge Handshake Authentication Protocol which is also called CHAP, or Unix login authentication may be adopted. RADIUS is an extensible protocol, and all the work it does is based on an attribute-length-value vector. RADIUS also supports a manufacturer to extend a manufacturer proprietary attribute.

Openflow: it is a standard communication interface defined between a control layer and forwarding layer of a Software Defined Network architecture, called SDN architecture. Openflow may directly access and operate a forwarding plane of a physical network device or a virtual network device (for example, a switch and a router).

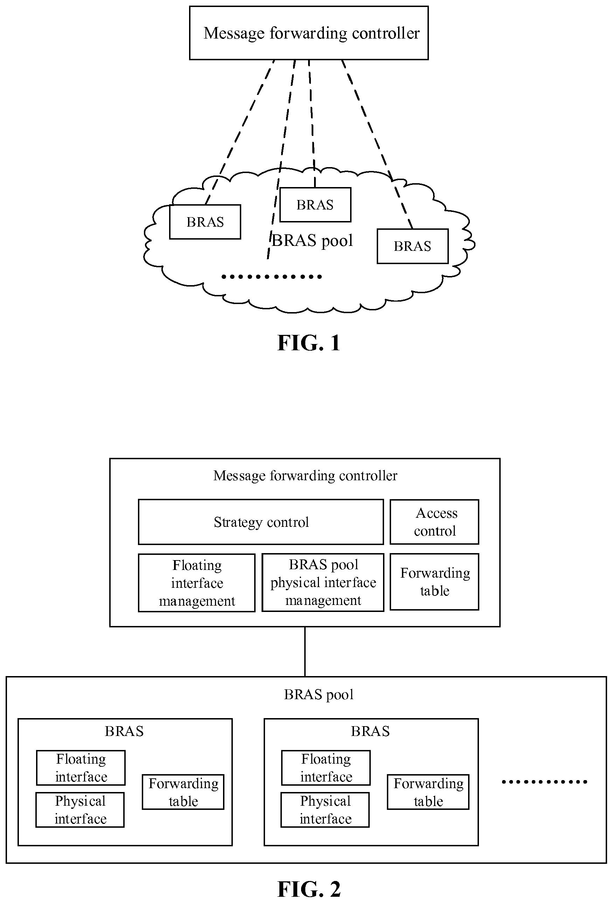

FIG. 1 is a first composition diagram of a forwarding system according to an embodiment of the application. As shown in FIG. 1, the forwarding system includes a message forwarding controller and a BRAS pool. Herein, the BRAS pool consists of multiple interconnected BRASs, and an access request message may reach any BRAS in the BRAS pool.

FIG. 2 is a second composition diagram of a forwarding system according to an embodiment of the application. As shown in FIG. 2, a message forwarding controller includes a strategy control module, an access control module, a floating interface management module, a BRAS pool physical interface management module and a forwarding table module.
1. The strategy control module has the following functions. A physical interface is queried in the BRAS pool physical interface management module of the message forwarding controller according to a BRAS pool and a specific BRAS. A floating interface unbound with any physical interface is queried in the floating interface management module of the message forwarding controller. A floating interface is queried in the floating interface management module of the message forwarding controller according to a physical interface of a BRAS. A physical interface is bound with a floating interface. The floating interface management module of the message forwarding controller is notified to add a binding relationship between the floating interface and the physical interface. The floating interface management module of the message forwarding controller is notified to update the binding relationship between the floating interface and the physical interface. A user physical interface notification of the access control module of the message forwarding controller is received. One floating interface is selected from floating interfaces queried according to a physical interface and notified to the access control module of the message forwarding controller. An orchestration strategy is configured. Orchestration is triggered when an orchestration triggering condition is met. A forwarding table is queried in the forwarding table module of the message forwarding controller according to a floating interface. A physical interface is deleted in the BRAS pool physical interface management module of the message forwarding controller. The forwarding table module of the message forwarding controller is notified to transmit the forwarding table.
2. The access control module has the following functions. An access request message reported by a physical interface of a BRAS is received. When physical interfaces of multiple BRASs report the same access request message, the access request message of one physical interface is selected according to a strategy. User access and a physical interface for access are notified to the strategy control module of the message forwarding controller. A floating interface notified by the strategy control module of the message forwarding controller and associated with a forwarding table is received. The forwarding table module of the message forwarding controller is notified to generate the forwarding table. A request response message is generated, and the access response message is transmitted to the physical interface of the BRAS.
3. The floating interface management module has the following functions. A floating interface is configured. Query of an interface unbound with any physical interface is provided. An interface for querying a floating interface according to a physical interface is provided. An interface for adding binding of the floating interface with the physical interface is provided. An interface for updating binding of the floating interface with the physical interface is provided. A function of storing and recording a binding relationship between the floating interface and the physical interface is provided. The floating interface bound with the physical interface is transmitted to a floating interface module of a BRAS including the physical interface.
4. The BRAS pool physical interface management module has the following functions. A physical interface reported by a BRAS is received and stored. An interface for querying the physical interface of the BRAS pool is provided. An interface for querying the physical interface of the BRAS is provided. An interface for deleting the physical interface of the BRAS is provided.
5. The forwarding table module has the following functions. An interface for generating a forwarding table is provided. The forwarding table is transmitted to a forwarding table module of a BRAS, the BRAS being a BRAS with a physical interface bound with a floating interface in the forwarding table. An interface for querying the forwarding table according to the floating interface is provided. A notification of transmitting to the BRAS from the message forwarding controller is received.

As shown in FIG. 2, the BRAS pool includes more than one BRAS. Herein, the BRAS includes a floating interface module, a physical interface module and a forwarding table module.
1. The floating interface module has the following functions. A floating interface transmitted by the floating interface management module of the message forwarding controller and associated with a physical interface of the BRAS is received and stored in the module. A to-be-forwarded message notified by the physical interface module of the BRAS is received. A floating interface is searched according to MAC, and if the floating interface is not found, the message is discarded. A header of Layer 2 is removed, and the forwarding table is searched for forwarding. A message forwarded to the floating interface by the forwarding table module of the BRAS is received, the bound physical interface is searched, and the message is sent to the searched out physical interface.
2. The physical interface module has the following functions. The physical interface of the BRAS is reported to the BRAS pool physical interface management module of the message forwarding controller. An access request message is received and reported to the access control module of the message forwarding controller. An access response message transmitted by the access control module of the message forwarding controller is received, and the access response message is sent to a user. The message to be forwarded is received, and the message to be forwarded is sent to the floating interface management module of the BRAS. The message to be forwarded sent by the floating interface module of the BRAS is received and forwarded to the user.
3. The forwarding table module has the following functions. The forwarding table transmitted by the forwarding table module of the message forwarding controller is received and stored in the module. After the forwarding table is added, a user route is published. The message to be forwarded sent by the floating interface management module of the BRAS is received, and the forwarding table is searched to forward the message. When the searched out output interface is a floating interface, the message to be forwarded is sent to the floating interface management module of the BRAS. When the searched out output interface is a network-side interface, the message to be forwarded is sent to the network-side interface for forwarding.

By use of the forwarding system, a BRAS access process, BRAS-based message forwarding process and a BRAS management process may be completed. Each process will be explained and described below.

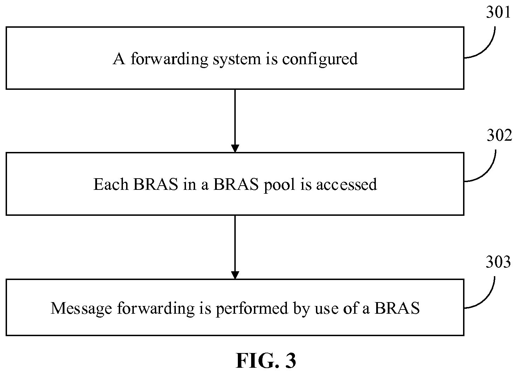

FIG. 3 is a flowchart of the access and forwarding according to an embodiment of the application. As shown in FIG. 3, the process includes the following steps.

At 301, a forwarding system is configured.

In an implementation, a physical interface is reported to a message forwarding controller; a floating interface and an interface attribute thereof are configured; and an access physical interface is bound with the floating interface.

At 302, each BRAS in a BRAS pool is accessed.

In an implementation, access protocol request messages in the BRAS pool are sent to the message forwarding controller by multiple BRASs; a selection of a physical interface and a selection of a floating interface are completed in the message forwarding controller; access processing is completed; and a forwarding table is generated, an interface associated with the forwarding table being the selected floating interface.

At 303, message forwarding is performed by use of a BRAS.

In an implementation, a message is received by a physical interface and sent to an associated floating interface; the message is checked by the floating interface and, if it is an illegal message, the message is discarded; a forwarding table is queried, and the message is forwarded according to an output interface; if the output interface is a floating interface, the message is sent from a physical interface associated with the floating interface; and if the output interface is a network-side interface, the message is directly sent from the network-side interface.

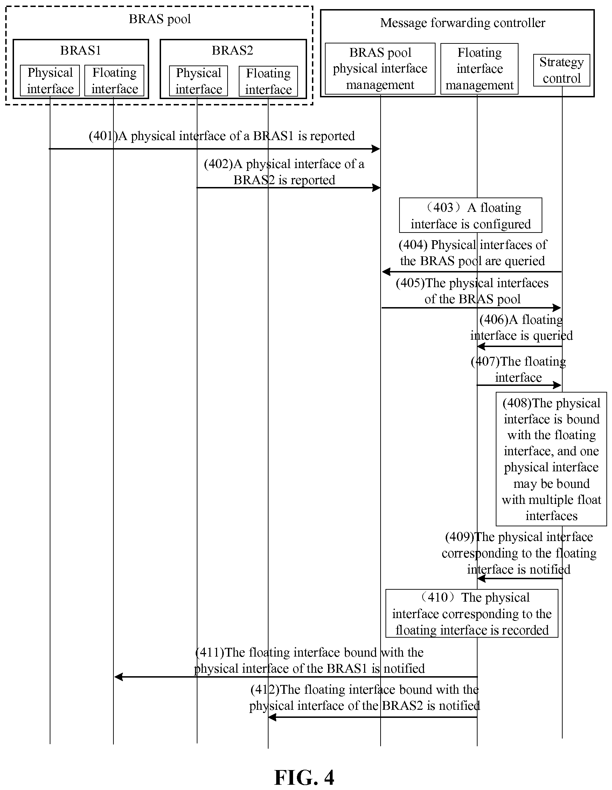

FIG. 4 is a flowchart of configuring a forwarding system according to an embodiment of the application. As shown in FIG. 4, the process includes the following steps.

At 401, a physical interface module of a BRAS1 in a BRAS pool reports a physical interface to a BRAS pool physical interface management module of a message forwarding controller, information of the reported physical interface including, but not limited to: an interface name, an interface MAC address, an interface status, a rate and the like. The information of the physical interface may be reported through an SNMP or a NETCONF protocol, as well as other protocols such as extended Openflow or extended RADIUS.

At 402, a physical interface module of a BRAS2 in the BRAS pool reports a physical interface to the BRAS pool physical interface management module of the message forwarding controller, information of the reported physical interface including, but not limited to: an interface name, an interface MAC address, an interface status, a rate and the like.

At 403, the floating interface is configured in a floating interface management module of the message forwarding controller, configuration information including: an interface name, a description, a Media Access Control address which is also called MAC address, a gateway Internet Protocol address which is also called MAC address, and the like. When multiple floating interfaces are configured, the floating interfaces may be configured one by one, and a configuration template may also be provided and then the floating interfaces are dynamically generated through the template.

At 404, a strategy control module of the message forwarding controller queries the physical interfaces of the BRAS pool in the BRAS pool physical interface management module.

At 405, the BRAS pool physical interface management module of the message forwarding controller returns the physical interfaces of the BRAS pool to the strategy control module.

At 406, the strategy control module of the message forwarding controller queries a floating interface unbound with any physical interface in the floating interface management module.

At 407, the floating interface management module of the message forwarding controller returns the floating interface unbound with any physical interface to the strategy control module.

At 408, the strategy control module of the message forwarding controller completes binding a physical interface with a floating interface. One physical interface may be bound with multiple floating interfaces. The physical interface may be bound with the floating interface one-by-one manually or dynamically, or the unbound floating interfaces may be uniformly bound with each physical interface.

At 409, the strategy control module of the message forwarding controller notifies a configured binding relationship to the floating interface management module.

At 410, the floating interface management module of the message forwarding controller records the binding relationship with the physical interfaces.

At 411, the floating interface management module of the message forwarding controller notifies the floating interface bound with the physical interface of the BRAS1 to a floating interface module of the BRAS1, and the floating interface module of the BRAS1 records the relationship with the physical interface. An interface for notification may be implemented by a network management interface supporting SNMP, Netconf and the like, and may also be implemented by extended RADIUS or Openflow protocol.

At 412, the floating interface management module of the message forwarding controller notifies the floating interface bound with the physical interface of the BRAS2 to a floating interface module of the BRAS2, and the floating interface module of the BRAS2 records the relationship with the physical interface.

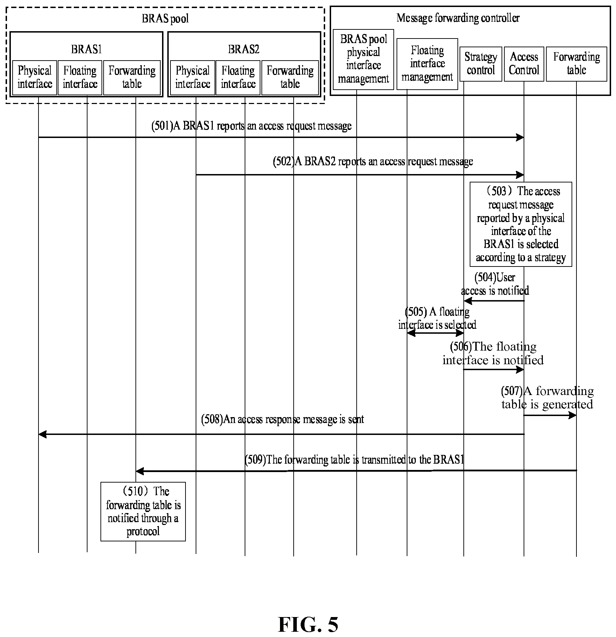

FIG. 5 is a flowchart of accessing each BRAS in a BRAS pool according to an embodiment of the application. As shown in FIG. 5, the process includes the following steps.

At 501, a physical interface of a BRAS1 in the BRAS pool receives an access request message and reports the access request message to an access control module of a message forwarding controller. A protocol for reporting may use a packet in message of Openflow, and Generic Routing Encapsulation (GRE) or Virtual Extensible Local Area Network (VxLAN) tunnel encapsulation may also be performed on the access request message.

At 502, a physical interface of a BRAS2 in the BRAS pool receives an access request message and reports the access request message to the access control module of the message forwarding controller. A protocol for reporting may use a packet in message of Openflow, and GRE or VxLAN tunnel encapsulation may also be performed on the access request message.

At 503, the access control module of the message forwarding controller selects the physical interface of the BRAS1 for access processing according to a certain strategy. The strategy includes, but not limited to: first in first processed, minimum number of users, maximum remaining memory, minimum CPU utilization and the like.

At 504, the access control module of the message forwarding controller notifies the physical interface for the user to access to a strategy control module.

At 505, the strategy control module of the message forwarding controller queries a floating interface bound with the physical interface in a floating interface management module according to the physical interface.

At 506, the floating interface management module of the message forwarding controller queries the bound floating interface according to the physical interface. If only one floating interface is found, the floating interface is returned to the strategy control module. If multiple floating interfaces are found, a floating interface is selected according to a strategy and returned to the strategy control module, the strategy including, but not limited to, a number of users on the floating interface.

At 507, the access control module of the message forwarding controller notifies a forwarding table module of the message forwarding controller to generate a forwarding table, the forwarding table including a user table and a user route table.

Herein, physical interfaces and floating interfaces are counted, and after 507 is executed, each of the number of users on the physical interfaces used for access and the number of users on the floating interfaces for access is increased by one.

At 508, the access control module of the message forwarding controller sends an access response message to the selected physical interface of the BRAS1. A sending protocol may use a packet out message of Openflow, and GRE or VxLAN tunnel encapsulation may also be performed on the access response message. The physical interface receives and decapsulates the access response message and then sends it to an access terminal.

At 509, the forwarding table module of the message forwarding controller transmits the generated user forwarding table to a forwarding table module of the BRAS1.

At 510, the forwarding table module of the BRAS1 stores the transmitted forwarding table, the forwarding table including a user table and a user route table, and notifies a user-side route to a network side to ensure that the message from the access user reaches the BRAS1 through the route.

Through the above process, the access control module of the message forwarding controller selects a specific BRAS to perform operation of accessing and becoming online according to the above strategy, so that an optimal load sharing may be implemented.

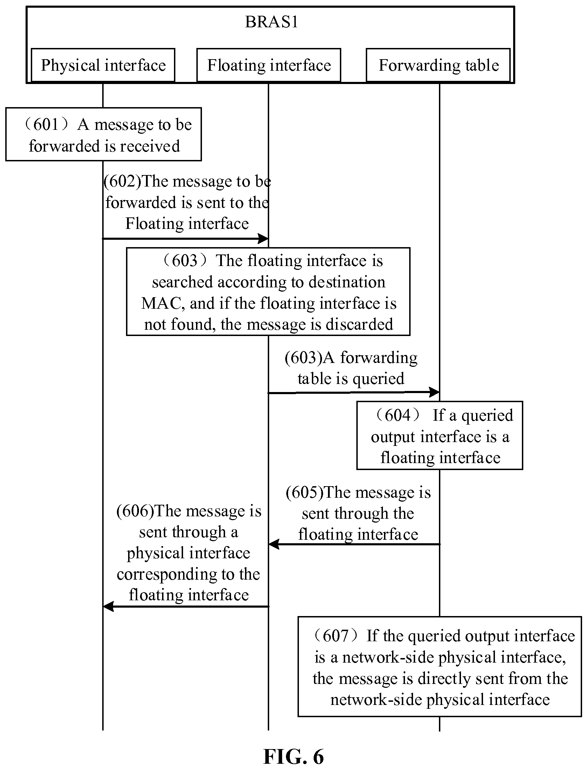

FIG. 6 is a flowchart of forwarding a message by use of a BRAS according to an embodiment of the application. As shown in FIG. 6, the process includes the following steps.

At 601, a physical interface of a BRAS1 receives a message to be forwarded.

At 602, the message to be forwarded is sent to a floating interface module of the BRAS1, and a floating interface is queried according to the physical interface.

At 603, the floating interface is queried according to destination MAC. If the floating interface is not found, the message to be forwarded is discarded, otherwise proceed to next processing. BRAS service processing is performed on the message to be forwarded according to a user table, and after the processing is completed, a header of Layer 2 is removed.

At 604, a route table is queried, and a found output interface is a floating interface.

At 605, if the found output interface is a floating interface, the message is forwarded through the floating interface.

At 606, a physical interface is queried according to the floating interface, and then the message is forwarded according to the physical interface.

At 607, if it is queried that the output interface is a network-side physical interface, the message is directly forwarded from the network-side physical interface.

After the success for a user in becoming online and normal forwarding, BRASs may be orchestrated and managed according to a strategy.

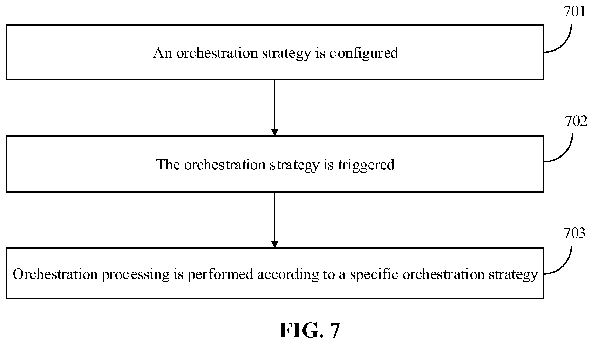

FIG. 7 is a flowchart of orchestrating and managing BRASs according to an embodiment of the application. As shown in FIG. 7, the process includes the following steps.

At 701, an orchestration strategy is configured.

Herein, multiple orchestration strategies may be configured, and the orchestration strategies include, but not limited to: a BRAS-unavailable migration strategy, a manual migration strategy or a time-based migration strategy.

At 702, the orchestration strategy is triggered.

Herein, the orchestration strategy is triggered according to a strategy triggering condition of the configured orchestration strategy. Each orchestration strategy is configured with a triggering condition and a migration processing flow. Migration is triggered when the triggering condition is met, and the migration is implemented according to the configured migration processing flow.

At 703, orchestration processing is performed according to a specific orchestration strategy.

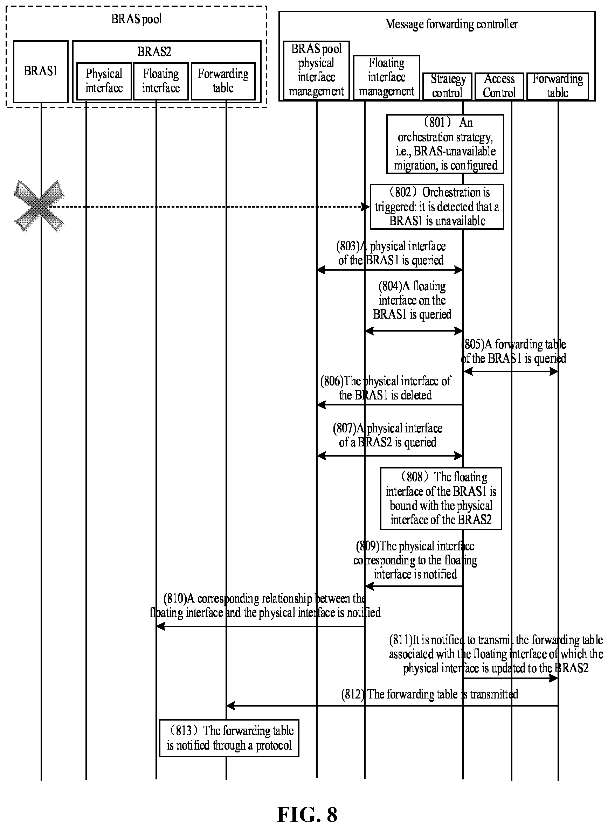

FIG. 8 is a flowchart of a BRAS-unavailable migration process according to an embodiment of the application. As shown in FIG. 8, the process includes the following steps.

At 801, an orchestration strategy for BRAS-unavailable migration is configured on a strategy control module of a message forwarding controller. Responsive to detecting that a certain BRAS is unavailable, users of the BRAS are migrated to another available BRAS. The users may be migrated to one BRAS or migrated to multiple BRASs, and all these BRASs are required to be in the same BRAS pool. Migration to one BRAS is exemplarily described. A detection mechanism may adopt protocols such as SNMP, Netconf, or Openflow.

At 802, responsive to detecting, by the strategy control module of the message forwarding controller, that a BRAS1 is unavailable, BRAS-unavailable user migration is triggered.

At 803, a strategy control module of the message forwarding controller queries a physical interface of the BRAS1 in a BRAS pool physical interface management module.

At 804, the strategy control module of the message forwarding controller queries a floating interface bound with the physical interface of the BRAS1 in a floating interface management module according to the queried physical interface of the BRAS1.

At 805, the strategy control module of the message forwarding controller queries a forwarding table associated with the BRAS1 in a forwarding table module of the message forwarding controller according to the queried floating interface bound with the physical interface of the BRAS1.

At 806, since the BRAS1 is unavailable, the strategy control module of the message forwarding controller deletes the physical interface of the BRAS1 in the BRAS pool physical interface management module.

At 807, the strategy control module of the message forwarding controller queries a physical interface of a BRAS2 in the BRAS pool physical interface management module.

At 808, the strategy control module of the message forwarding controller binds the floating interface associated with the BRAS1 with the physical interface of the BRAS2.

At 809, the strategy control module of the message forwarding controller notifies the physical interface, corresponding to the floating interface, of the BRAS2 to the floating interface management module, and the floating interface management module updates a binding relationship between the floating interface and the physical interface. Specifically, the floating interface bound with the physical interface of the BRAS1 is updated to be bound with the physical interface of the BRAS2.

At 810, the floating interface management module of the message forwarding controller notifies the updated binding relationship between the floating interface and the physical interface to a floating interface management module for the BRAS2, and the floating interface management module for the BRAS2 records the binding relationship. An interface for notification may be implemented by a network management interface supporting SNMP, Netconf and the like, and may also be implemented by extended RADIUS or Openflow protocol.

At 811, the strategy control module of the message forwarding controller notifies the forwarding table module of the message forwarding controller to transmit a user table associated with the floating interface of which the binding relationship is updated to the BRAS2.

At 812, the forwarding table module of the message forwarding controller notifies and transmits the forwarding table to a forwarding table module of the BRAS2. An interface for notification may be implemented by a network management interface supporting SNMP, Netconf and the like, and may also be implemented by extended RADIUS or Openflow protocol.

At 813, the forwarding table module of the BRAS2 receives and locally stores the forwarding table, the forwarding table includes a user table and a user route table, and a BRAS2 network side notifies the forwarding table.

Through the above flow, BRAS-unavailable user handover to another BRAS may be implemented in the message forwarding controller according to the abovementioned method, so that high availability for a user is ensured.

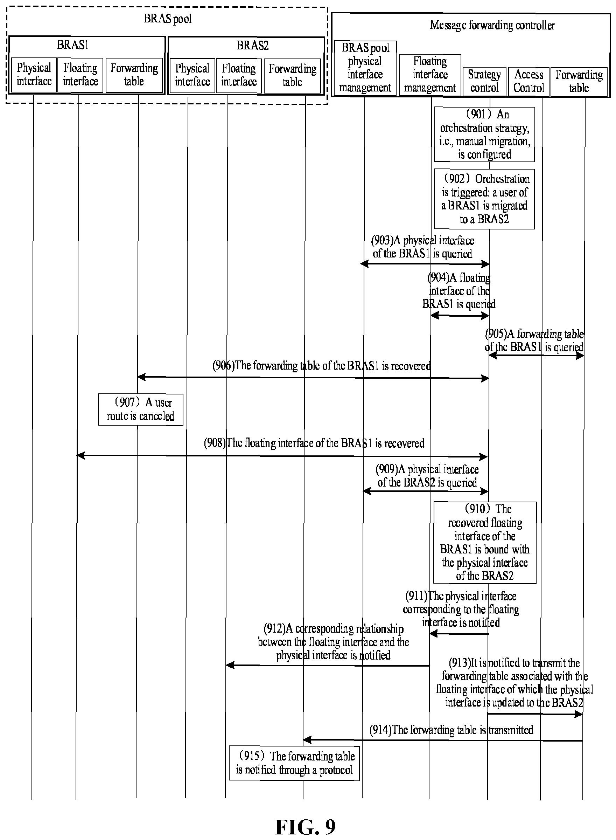

FIG. 9 is a flowchart of a manual migration process according to an embodiment of the application. As shown in FIG. 9, the flow includes the following steps.

At 901, an orchestration strategy is configured in a strategy control module of a message forwarding controller, and the strategy is configured as manual migration.

At 902, when user migration is manually triggered, a user of a BRAS1 is selected to be migrated to a BRAS2.

At 903, the strategy control module of the message forwarding controller queries a physical interface of the BRAS1 in a BRAS pool physical interface management module.

At 904, the strategy control module of the message forwarding controller queries a floating interface bound with the physical interface of the BRAS1 in a floating interface management module according to the queried physical interface of the BRAS1.

At 905, the strategy control module of the message forwarding controller queries a forwarding table associated with the BRAS1 in a forwarding table module of the message forwarding controller according to the queried floating interface bound with the physical interface of the BRAS1.

At 906, the strategy control module of the message forwarding controller recovers the forwarding table in a forwarding table module of the BRAS1.

At 907, after the forwarding table is recovered, the forwarding table module of the BRAS1 cancels a user route.

At 908, the strategy control module of the message forwarding controller recovers the floating interface in a floating interface management module for the BRAS1.

At 909, the strategy control module of the message forwarding controller queries a physical interface of a BRAS2 in the BRAS pool physical interface management module.

At 910, the strategy control module of the message forwarding controller binds the floating interface associated with the BRAS1 with the physical interface of the BRAS2.

At 911, the strategy control module of the message forwarding controller notifies the physical interface, corresponding to the floating interface, of the BRAS2 to the floating interface management module, and the floating interface management module updates a binding relationship between the floating interface and the physical interface. Specifically, the floating interface bound with the physical interface of the BRAS1 is updated to be bound with the physical interface of the BRAS2.

At 912, the floating interface management module of the message forwarding controller notifies the updated binding relationship between the floating interface and the physical interface to a floating interface management module for the BRAS2, and the floating interface management module for the BRAS2 records the binding relationship. An interface for notification may be implemented by a network management interface supporting SNMP, Netconf and the like, and may also be implemented by extended RADIUS or Openflow protocol.

At 913, the strategy control module of the message forwarding controller notifies the forwarding table module of the message forwarding controller to notify a user table associated with the floating interface of which the binding relationship is updated to the BRAS2.

At 914, the forwarding table module of the message forwarding controller notifies and transmits the forwarding table to a forwarding table module of the BRAS2. An interface for notification may be implemented by a network management interface supporting SNMP, Netconf and the like, and may also be implemented by extended RADIUS or Openflow protocol.

At 915, the forwarding table module of the BRAS2 receives and locally stores the forwarding table, the forwarding table includes a user table and a user route table, and a BRAS2 network side notifies the forwarding table.

Because of requirements of operation and maintenance, for example, operations over the BRAS such as software and hardware updating and failure positioning, through the above flow, a user may be manually migrated to another BRAS through the message forwarding controller according to the abovementioned method, so that the user may be kept online.

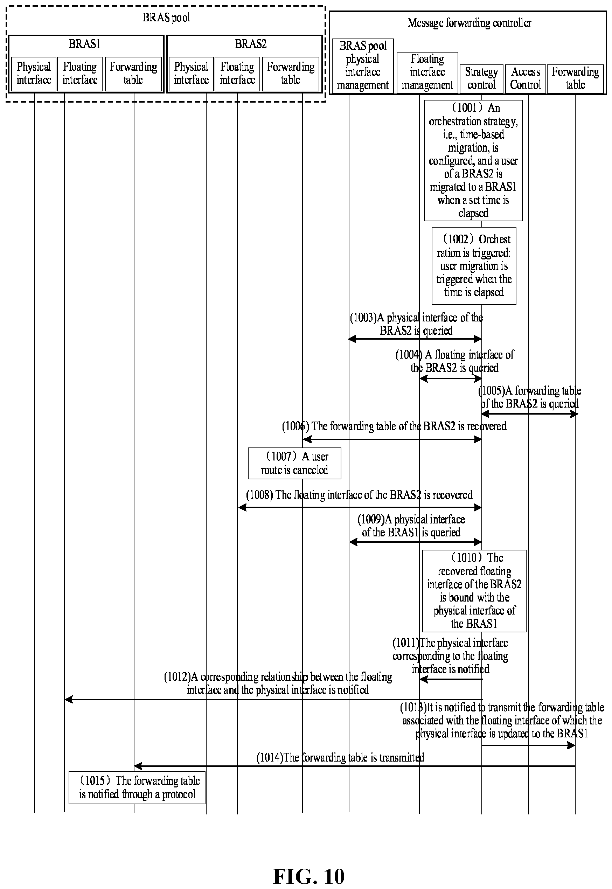

FIG. 10 is a schematic diagram of a time-based migration process according to an embodiment of the application. As shown in FIG. 10, the flow includes the following steps.

At 1001, an orchestration strategy is configured in a strategy control module of a message forwarding controller, the strategy is configured as time-based migration, and a user of a BRAS2 is selected to be migrated to a BRAS 1.

At 1002, user migration is triggered when a set time expires.

At 1003, the strategy control module of the message forwarding controller queries a physical interface of the BRAS2 in a BRAS pool physical interface management module.

At 1004, the strategy control module of the message forwarding controller queries a floating interface bound with the physical interface of the BRAS2 in a floating interface management module according to the queried physical interface of the BRAS2.

At 1005, the strategy control module of the message forwarding controller queries a forwarding table associated with the BRAS2 in a forwarding table module of the message forwarding controller according to the queried floating interface bound with the physical interface of the BRAS2.

At 1006, the strategy control module of the message forwarding controller recovers the forwarding table in a forwarding table module of the BRAS2.

At 1007, after the forwarding table is recovered, the forwarding table module of the BRAS2 cancels a user route.

At 1008, the strategy control module of the message forwarding controller recovers the floating interface in a floating interface management module for the BRAS2.

At 1009, the strategy control module of the message forwarding controller queries a physical interface of the BRAS1 in the BRAS pool physical interface management module.

At 1010, the strategy control module of the message forwarding controller binds the floating interface associated with the BRAS2 with the physical interface of the BRAS1.

At 1011, the strategy control module of the message forwarding controller notifies the physical interface, corresponding to the floating interface, of the BRAS1 to the floating interface management module, and the floating interface management module updates a binding relationship between the floating interface and the physical interface and updates the floating interface bound with the physical interface of the BRAS2 to be bound with the physical interface of the BRAS1.

At 1012, the floating interface management module of the message forwarding controller notifies the updated binding relationship between the floating interface and the physical interface to a floating interface management module for the BRAS1, and the floating interface management module for the BRAS1 records the binding relationship. An interface for notification may be implemented by a network management interface supporting SNMP, Netconf and the like, and may also be implemented by extended RADIUS or Openflow protocol.

At 1013, the strategy control module of the message forwarding controller notifies the forwarding table module of the message forwarding controller to notify a user table associated with the floating interface of which the binding relationship is updated to the BRAS1.

At 1014, the forwarding table module of the message forwarding controller notifies and transmits the forwarding table to a forwarding table module of the BRAS 1. An interface for notification may be implemented by a network management interface supporting SNMP, Netconf and the like, and may also be implemented by extended RADIUS or Openflow protocol.

At 1015, the forwarding table module of the BRAS1 receives and locally stores the forwarding table, the forwarding table includes a user table and a user route table, and a network side of the BRAS1 notifies the forwarding table.

Through the above flow, if there are few users online in some time periods, the users may be migrated to some BRASs in these time periods, and BRASs from which the users are migrated may enter a dormant or off state, so that energy consumption is reduced, and operation and maintenance cost is reduced.

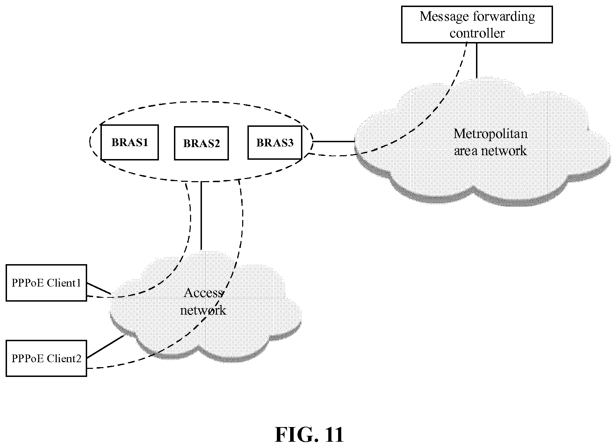

FIG. 11 is a network diagram of a user access deployment using Point-to-Point Protocol Over Ethernet, also called PPPoE, according to an embodiment of the application. Two PPPoE clients, i.e., Client1 and Client2 access a BRAS pool through an access network, and the BRAS pool includes three BRASs. The BRASs are located on a border of a metropolitan area network, a message forwarding controller is in a data center of the metropolitan area network, and the message forwarding controller establishes a connection with the BRAS pool to manage message forwarding of the BRAS pool.

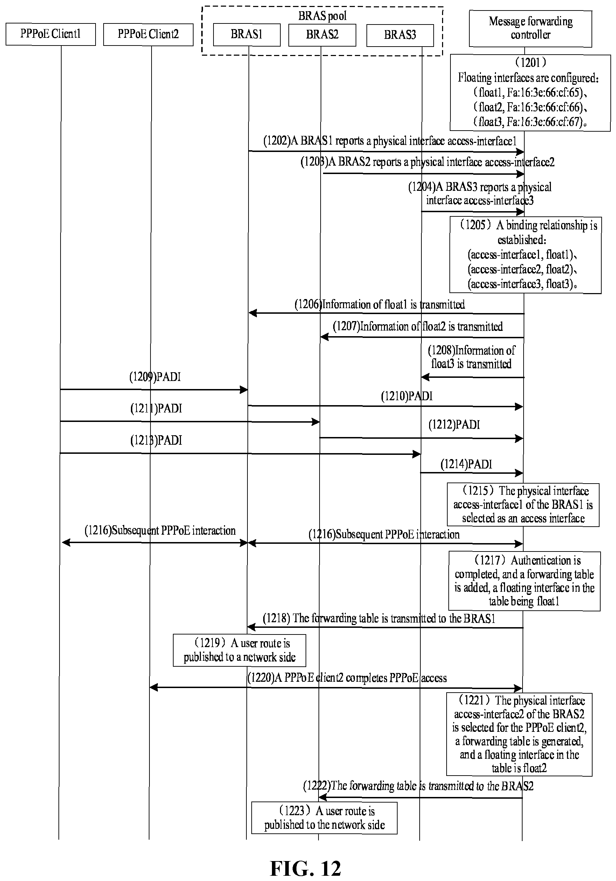

FIG. 12 is a schematic diagram of an access process of a PPPoE client according to an embodiment of the application. As shown in FIG. 12, the flow includes the following steps.

At 1201, a message forwarding controller configures floating interfaces and MACs of the floating interfaces: float1, Fa:16:3e:66:cf:65; float2, Fa:16:3e:66:cf:66; and float3, Fa:16:3e:66:cf:67.

At 1202, a BRAS1 reports a physical interface access-interface 1 to the message forwarding controller.

At 1203, a BRAS2 reports a physical interface access-interface2 to the message forwarding controller.

At 1204, a BRAS3 reports a physical interface access-interface3 to the message forwarding controller.

At 1205, the message forwarding controller establishes a binding relationship between the physical interfaces and the floating interfaces: access-interface1 is bound with float1, access-interface2 is bound with float2, and access-interface3 is bound with float3.

At 1206, floating interface information of float1 is transmitted to the BRAS1, and the BRAS1 stores the information of float1.

At 1207, floating interface information of float2 is transmitted to the BRAS2, and the BRAS2 stores the information of float2.

At 1208, floating interface information of float3 is transmitted to the BRAS3, and the BRAS3 stores the information of float3.

At 1209, a PPPoE Client 1 sends a first PPPoE message PADI to the BRAS1.

At 1210, the BRAS1 sends the message PDAI to the message forwarding controller.

At 1211, the PPPoE Client1 sends the first PPPoE message PADI to the BRAS2.

At 1212, the BRAS2 sends the message PADI to the message forwarding controller.

At 1213, the PPPoE Client1 sends the first PPPoE message PADI to the BRAS3.

At 1214, the BRAS3 sends the message PADI to the message forwarding controller.

Multiple BRASs have received the message reported by the client.

At 1215, the message forwarding controller selects access-interface 1 of the BRAS1 as a physical interface.

At 1216, subsequent PPPoE interaction is performed, and the physical interface through which the protocol message passes is the access-interface 1 of the BRAS1 selected by the message forwarding controller. The PPPoE interaction is a flow specified by a standard protocol, and thus will not be elaborated.

At 1217, after an authentication of the access protocol is completed, a forwarding table is generated, and a floating interface in the forwarding table is floatl bound with access-interface1. Access of the PPPoE client is completed, and a MAC address of a stored PPPoE session is the MAC address of float1.

At 1218, the message forwarding controller transmits the forwarding table of the PPPoE client1 to the BRAS1, and the BRAS1 stores the forwarding table.

At 1219, after receiving the forwarding table, the BRAS1 publishes a user route of the PPPoE client1 to a network side.

At 1220, access of the PPPoE client2 is completed, and access-interface2 of the BRAS2 is selected as the physical interface. A process is the same as that of the PPPoE client1 and will not be elaborated.

At 1221, the physical interface selected by the message forwarding controller for the PPPoE Client2 is access-interface2, and a floating interface in the generated forwarding table is float2.

At 1222, the message forwarding controller transmits the forwarding table of the PPPoE client2 to the BRAS2, and the BRAS2 stores the forwarding table.

At 1223, after receiving the forwarding table, the BRAS2 publishes a user route of the PPPoE client2 to the network side.

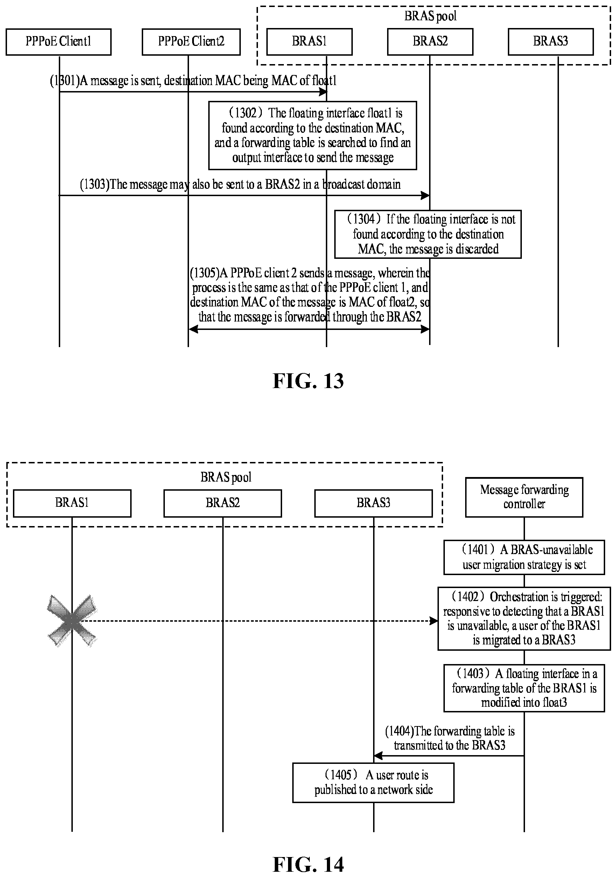

FIG. 13 is a schematic diagram of a message forwarding process for a PPPoE client according to an embodiment of the application. As shown in FIG. 13, the flow includes the following steps.

At 1301, a PPPoE client1 sends a message to be forwarded, and destination MAC is MAC of a floating interface float1.

At 1302, a physical interface access-interface1 of a BRAS1 receives the message, queries a floating interface according to the destination MAC, and the queried floating interface is float1. A forwarding table is searched to find an output interface to forward the message.

At 1303, a physical interface of a BRAS2 also receives the message to be forwarded sent from the PPPoE client1.

At 1304, the BRAS2 searches the floating interface according to the destination MAC, and if the floating interface is not searched out, the message to be forwarded is discarded.

At 1305, a PPPoE client2 sends a message. The process is the same as that of the PPPoE client1. Destination MAC of the message is MAC of float2, and the message is forwarded through the BRAS2.

FIG. 14 is a schematic diagram of a BRAS 1-unavailable user migration process according to an embodiment of the application. As shown in FIG. 14, the flow includes the following steps.

At 1401, a message forwarding controller sets a migration strategy to be BRAS-unavailable migration.

At 1402, when the message forwarding controller detects that a BRAS1 is unavailable, the migration is triggered to migrate a user on the BRAS1 to a BRAS3.

At 1403, a floating interface in a forwarding table corresponding to the BRAS1 is modified into float3.

At 1404, the message forwarding controller transmits the forwarding table of the BRAS1 to the BRAS3, and the BRAS3 stores the forwarding table.

At 1405, after receiving the forwarding table, the BRAS3 publishes a user route to a network side. The subsequent message to be forwarded to the BRAS1 will be forwarded through the BRAS3.

It is to be understood that the disclosed device and method in some embodiments provided by the application may be implemented in other ways. The device embodiment described above is only schematic, and for example, division of the units is only a division of a logic function, and other division manners may be adopted during practical implementation. For example, multiple units or components may be combined or integrated into another system, or some characteristics may be neglected or not executed. In addition, coupling or direct coupling or communication connection between each displayed or discussed component may be indirect coupling or communication connection, implemented through some interfaces, of the device or the units, and may be electrical and mechanical or adopt other forms.

The units described above as separate parts may or may not be physically separated, and the components displayed as units may or may not be physical units, and namely may be located in the same place, or may also be distributed to multiple network units. Some of all of the units may be selected according to a practical requirement to achieve the purpose of the solution of the embodiment.

In addition, all functional units in each embodiment of the application may be integrated into one processing unit, or each unit may serve as an independent unit, or two or more than two units may be integrated into a unit. The integrated unit may be implemented in the form of hardware, and may also be implemented in the form of hardware and software functional unit.

As one of ordinary skill in the art would appreciate, all or part of the steps of the method embodiment may be implemented by a hardware instructed through a program, the program may be stored in a computer-readable storage medium, and the program is executed to execute the steps of the method embodiment. The storage medium includes: various media capable of storing program codes such as a mobile storage device, a Read Only Memory (ROM), a magnetic disk or a compact disc.

Or, when being implemented in the form of software functional module and sold or used as an independent product, the integrated unit of the application may also be stored in a computer-readable storage medium. Based on such understanding, the technical solutions of the embodiments of the application substantially or parts making contributions to the conventional art may be embodied in the form of software product, and the computer software product is stored in a storage medium, includes a plurality of instructions configured to enable a computer device (which may be a personal computer, a server, a network device or the like) to execute all or part of the method in each embodiment of the application. The storage medium includes: various media capable of storing program codes such as a mobile storage device, a ROM, a magnetic disk or an optical disk.

Correspondingly, an embodiment of the application also provides a computer storage medium, in which a computer program is stored, and the computer program is configured to execute the BRAS management method or message forwarding method of the embodiments of the application.

The above is only the specific implementation of the application and not intended to limit the scope of protection of the application. Any variations or replacements apparent to those skilled in the art within the technical scope disclosed by the application shall fall within the scope of protection of the application. Therefore, the scope of protection of the application shall be subject to the scope of protection of the claims.

### INDUSTRIAL APPLICABILITY

According to the technical solutions of the embodiments of the application, multiple BRASs are interconnected and pooled to form the BRAS pool, and online users are managed by the message forwarding controller outside the BRAS pool through customized floating interfaces. Herein, interconnecting and pooling the multiple BRASs has the advantage that loads (i.e., the online users) may optimally be balanced to different BRASs according to a strategy; and adopting the floating interfaces has the advantages that multiple customized strategies may be adopted to orchestrate and manage the BRASs for load handover, more convenience is brought to operation and maintenance and relatively few resources may be consumed according to a load condition.

## Claims

1. A Broadband Remote Access Server, BRAS, management method, comprising:
responsive to receiving access request messages sent by more than one BRAS in a BRAS pool, selecting a target BRAS from the more than one BRAS according to a first preset strategy, and determining a target physical interface of the target BRAS as an access physical interface for a user; and
determining a target floating interface bound with the target physical interface, generating a forwarding table associated with the target floating interface, and sending an access response message containing the forwarding table to the target BRAS.

2. The method of claim 1, further comprising:
acquiring information of a physical interface of each BRAS in the BRAS pool, and binding the physical interface of each BRAS with a respective preset floating interface.

3. The method of claim 2, wherein acquiring the information of the physical interface of each BRAS in the BRAS pool comprises:
receiving the information of the physical interface from each BRAS in the BRAS pool, wherein the BRAS pool comprises more than one BRAS, each BRAS has a physical interface, and wherein the information of the physical interface comprises: an interface name, an interface Media Access Control, MAC, address, an interface status and an interface rate.

4. The method of claim 2, further comprising:
before binding the physical interface of each BRAS with the respective preset floating interface,
configuring more than one floating interface, wherein configuration information of the floating interface comprises: an interface name, description information, an interface Media Access Control, MAC, address and a gateway Internet Protocol, IP, address.

5. The method of claim 2, wherein binding the physical interface of each BRAS with the respective preset floating interface comprises:
determining a physical interface on which a binding operation is to be performed in the BRAS pool, and querying floating interfaces in an unbound state;
selecting one or more floating interfaces from the floating interfaces in the unbound state, and binding the selected one or more floating interfaces with the physical interface on which the binding operation is to be performed.

6. The method of claim 2, further comprising:
after binding the physical interface of each BRAS with the respective preset floating interface,
storing a binding relationship between the physical interface of each BRAS and the floating interface, and sending the binding relationship between the physical interface of the BRAS and the floating interface to the BRAS for storage.

7. The method of claim 1, wherein selecting the target BRAS from the more than one BRAS according to the first preset strategy comprises:
selecting the target BRAS from the more than one BRAS according to at least one of the following strategies:
the BRAS corresponding to a first received access request message is determined as the target BRAS;
the BRAS with a minimum number of users in the more than one BRAS is determined as the target BRAS;
the BRAS with a maximum remaining memory in the more than one BRAS is determined as the target BRAS; or
the BRAS with a minimum processor utilization in the more than one BRAS is determined as the target BRAS.

8. The method of claim 1, wherein determining the target floating interface bound with the target physical interface comprises:
querying the floating interface bound with the target physical interface;
in the case that one floating interface is bound with the target physical interface, determining the floating interface bound with the target physical interface as the target floating interface; and
in the case that a plurality of floating interfaces are bound with the target physical interface, selecting the target floating interface from the plurality of floating interfaces according to a second preset strategy.

9. The method of claim 8, wherein selecting the target floating interface from the plurality of floating interfaces according to the second preset strategy comprises:
determining the floating interface with a minimum number of users in the plurality of floating interfaces as the target floating interface.

10. A message forwarding method, comprising:
determining a first physical interface according to a destination Media Access Control, MAC, address of a received message to be forwarded;
determining whether an output interface is a floating interface or not according to the message to be forwarded and the first physical interface; and
in the case that the output interface is a floating interface, sending the message to be forwarded according to a second physical interface in a binding relationship with the output interface.

11. The method of claim 10, wherein determining the first physical interface according to the destination MAC address of the received message to be forwarded comprises:
determining a floating interface according to the destination MAC address of the received message to be forwarded; and
determining the first physical interface according to a binding relationship between the floating interface and a physical interface.

12. The method of claim 10, further comprising:
in the case that the output interface is a network-side physical interface, directly sending the message to be forwarded from the network-side physical interface.

13. The method of claim 11, further comprising:
in the case that no floating interface is determined according to the destination MAC address, discarding the message to be forwarded.

14. The method of claim 10, wherein determining whether the output interface is a floating interface or not according to the message to be forwarded and the first physical interface comprises:
searching a forwarding table to determine whether the output interface is a floating interface or not according to a destination Internet Protocol, IP, of the message to be forwarded and the first physical interface.

15. The method of claim 14, wherein the forwarding table comprises a user table and a route table, and the method further comprises:
in the case that the floating interface is determined according to the destination MAC address,
performing Broadband Remote Access Server, BRAS, service processing on the message to be forwarded according to the user table; and
after BRAS service processing is performed on the message to be forwarded, removing a header of Layer 2 protocol of the message to be forwarded, and querying an output interface for the message to be forwarded according to the route table.

16. A Broadband Remote Access Server, BRAS, management method, comprising:
configuring one or more orchestration strategies for a BRAS, wherein configuration information of the orchestration strategy comprises: a migration triggering condition and a migration process; and
responsive to detecting that a first BRAS in a BRAS pool meets the migration triggering condition, migrating a user of the first BRAS to a second BRAS in the BRAS pool based on the migration process.

17. The method of claim 16, wherein the orchestration strategies comprise at least one of: a first orchestration strategy, a second orchestration strategy or a third orchestration strategy, and wherein
a migration triggering condition of the first orchestration strategy is that BRAS migration is triggered when the BRAS is in an unavailable state;
a migration triggering condition of the second orchestration strategy is that BRAS migration is triggered based on a manual operation; and
a migration triggering condition of the third orchestration strategy is that BRAS migration is triggered when a preset time is elapsed.

18. The method of claim 17, wherein migrating the user of the first BRAS to the second BRAS in the BRAS pool based on the migration process comprises:
querying a physical interface of the first BRAS as a first physical interface, querying a target floating interface bound with the first physical interface as a first floating interface, and querying a forwarding table associated with the first floating interface;
deleting the locally stored first physical interface and a binding relationship between the first physical interface and the first floating interface;
querying a physical interface of the second BRAS as a second physical interface;
binding the second physical interface with the first floating interface; and
sending a binding relationship between the second physical interface and the first floating interface to the second BRAS, and sending the forwarding table associated with the first floating interface to the second BRAS.

19. The method of claim 17, wherein migrating the user of the first BRAS to the second BRAS in the BRAS pool based on the migration process comprises:
querying a physical interface of the first BRAS as a first physical interface, querying a target floating interface bound with the first physical interface as a first floating interface, and querying a forwarding table associated with the first floating interface;
controlling the first BRAS to recover the locally stored forwarding table associated with the first floating interface, and controlling the first BRAS to recover the locally stored first floating interface;
querying a physical interface of the second BRAS as a second physical interface;
binding the second physical interface with the first floating interface; and
sending a binding relationship between the second physical interface and the first floating interface to the second BRAS, and sending the forwarding table associated with the first floating interface to the second BRAS.

20. A message forwarding controller, comprising:
an access control module, configured to, responsive to receiving access request messages sent by more than one Broadband Remote Access Server, BRAS, in a BRAS pool, select a target BRAS from the more than one BRAS according to a first preset strategy, determine a target physical interface of the target BRAS as an access physical interface for a user and notify the access physical interface for the user to a strategy control module;
the strategy control module, configured to determine a target floating interface bound with the target physical interface and notify a forwarding table module to generate a forwarding table associated with the target floating interface; and
the forwarding table module, configured to generate the forwarding table associated with the target floating interface, wherein
the access control module is configured to send an access response message containing the forwarding table to the target BRAS.

21. The controller of claim 20, further comprising:
a BRAS pool physical interface management module, configured to acquire information of a physical interface of each BRAS in the BRAS pool; and
a floating interface management module, configured to configure floating interfaces and record a binding relationship between a physical interface and a floating interface, wherein
the strategy control module is configured to bind the physical interface of each BRAS with a respective preset floating interface and notify the binding relationship between the physical interface and the floating interface to the floating interface management module.

22. The controller of claim 21, wherein the BRAS pool physical interface management module is configured to receive the information of the physical interface from each BRAS in the BRAS pool, wherein the BRAS pool comprises more than one BRAS, each BRAS has a physical interface and the information of the physical interface comprises: an interface name, an interface Media Access Control, MAC, address, an interface status and an interface rate.

23. The controller of claim 21, wherein the floating interface management module is configured to configure more than one floating interface, wherein configuration information of the floating interface comprises: an interface name, description information, an interface Media Access Control, MAC, address and a gateway Internet Protocol, IP, address.

24. The controller of claim 21, wherein the strategy control module is configured to determine a physical interface on which a binding operation is to be performed in the BRAS pool in the BRAS pool physical interface management module, query floating interfaces in an unbound state in the floating interface management module, select one or more floating interfaces from the floating interfaces in the unbound state and bind the selected one or more floating interfaces with the physical interface on which the binding operation is to be performed.

25. The controller of claim 21, wherein the floating interface management module is configured to send the binding relationship between the physical interface of each BRAS and the floating interface to the BRAS for storage.

26. The controller of claim 20, wherein the access control module is configured to select the target BRAS from the more than one BRAS according to at least one of the following strategies:
the BRAS corresponding to a first received access request message is determined as the target BRAS;
the BRAS with a minimum number of users in the more than one BRAS is determined as the target BRAS;
the BRAS with a maximum remaining memory in the more than one BRAS is determined as the target BRAS; or
the BRAS with a minimum processor utilization in the more than one BRAS is determined as the target BRAS.

27. The controller of claim 20, wherein the floating interface management module is configured to, query a floating interface bound with the target physical interface; in the case that one floating interface is bound with the target physical interface, determine the floating interface bound with the target physical interface as the target floating interface, in the case that a plurality of floating interfaces are bound with the target physical interface, select the target floating interface from the plurality of floating interfaces according to a second preset strategy; and notify the target floating interface to the strategy control module.

28. The controller of claim 27, wherein the floating interface management module is configured to determine the floating interface with a minimum number of users in the plurality of floating interfaces as the target floating interface.

29. A Broadband Remote Access Server, BRAS, comprising:
a physical interface module, configured to receive a message to be forwarded through a physical interface and send the message to be forwarded to a floating interface module;
the floating interface module, configured to determine a first physical interface according to a destination Media Access Control, MAC, address of the received message to be forwarded; and
a forwarding table module, configured to determine whether an output interface is a floating interface or not according to the message to be forwarded and the first physical interface, wherein
the floating interface module is configured to, in the case that the output interface is a floating interface, determine a second physical interface in a binding relationship with the output interface; and
the physical interface module is configured to send the message to be forwarded by use of the second physical interface in the binding relationship with the output interface.

30. The BRAS of claim 29, wherein the floating interface module is configured to determine a floating interface according to the destination MAC address of the received message to be forwarded, and determine the first physical interface according to a binding relationship between the floating interface and a physical interface.

31. The BRAS of claim 29, wherein the forwarding table module is configured to, in the case that the output interface is a network-side physical interface, directly send the message to be forwarded from the network-side physical interface.

32. The BRAS of claim 30, wherein the floating interface module is configured to, in the case that no floating interface is determined according to the destination MAC address, discard the message to be forwarded.

33. The BRAS of claim 29, wherein the forwarding table module is configured to search a forwarding table to determine whether the output interface is a floating interface or not according to a destination Internet Protocol, IP, of the message to be forwarded and the first physical interface.

34. The BRAS of claim 33, wherein the forwarding table comprises a user table and a route table, and in the case that the floating interface is determined according to the destination MAC address,
the forwarding table module is configured to perform BRAS service processing on the message to be forwarded according to the user table and, after the BRAS service processing is performed on the message to be forwarded, remove a header of Layer 2 protocol of the message to be forwarded, and query an output interface for the message to be forwarded according to the route table.

35. A message forwarding controller, comprising:
a strategy control module, configured to: configure one or more orchestration strategies for a Broadband Remote Access Server, BRAS, wherein configuration information of the orchestration strategy comprises: a migration triggering condition and a migration process; and responsive to detecting that a first BRAS in a BRAS pool meets the migration triggering condition, migrate a user of the first BRAS to a second BRAS in the BRAS pool based on the migration process.

36. The controller of claim 35, wherein the orchestration strategies comprise at least one of: a first orchestration strategy, a second orchestration strategy or a third orchestration strategy, and wherein
a migration triggering condition of the first orchestration strategy is that BRAS migration is triggered when the BRAS is in an unavailable state;
a migration triggering condition of the second orchestration strategy is that BRAS migration is triggered based on a manual operation; and
a migration triggering condition of the third orchestration strategy is that BRAS migration is triggered when a preset time is elapsed.

37. The controller of claim 36, further comprising:
a BRAS pool physical interface management module, configured to store information of a physical interface of each BRAS in the BRAS pool;
a floating interface management module, configured to record a binding relationship between a physical interface and a floating interface, and further configured to send a binding relationship between a second physical interface and a first floating interface to the second BRAS; and
a forwarding table module, configured to store a forwarding table associated with a target floating interface, wherein
the strategy control module is configured to: query, in the BRAS pool physical interface management module, a physical interface of the first BRAS as a first physical interface; query, in the floating interface management module, the target floating interface bound with the first physical interface as the first floating interface; query, in the forwarding table module, the forwarding table associated with the first floating interface; delete the first physical interface in the BRAS pool physical interface management module; delete a binding relationship between the first physical interface and the first floating interface in the floating interface management module; query, in the BRAS pool physical interface management module, a physical interface of the second BRAS as the second physical interface; bind the second physical interface with the first floating interface; notify the binding relationship between the second physical interface and the first floating interface to the floating interface management module; and notify the forwarding table module to send the forwarding table associated with the first floating interface to the second BRAS.

38. The controller of claim 36, further comprising:
a BRAS pool physical interface management module, configured to store information of a physical interface of each BRAS in the BRAS pool;
a floating interface management module, configured to record a binding relationship between a physical interface and a floating interface, further configured to send a binding relationship between a second physical interface and a first floating interface to the second BRAS, and further configured to send the binding relationship between the second physical interface and the first floating interface to the second BRAS;
a forwarding table module, configured to store a forwarding table associated with a target floating interface, wherein
the strategy control module is configured to: query, in the BRAS pool physical interface management module, a physical interface of the first BRAS as a first physical interface; query, in the floating interface management module, the target floating interface bound with the first physical interface as the first floating interface; query, in the forwarding table module, the forwarding table associated with the first floating interface; control the first BRAS to recover the locally stored forwarding table associated with the first floating interface; control the first BRAS to recover the locally stored first floating interface; query, in the BRAS pool physical interface management module, a physical interface of the second BRAS as the second physical interface; bind the second physical interface with the first floating interface; notify the binding relationship between the second physical interface and the first floating interface to the floating interface management module; and notify the forwarding table module to send the forwarding table associated with the first floating interface to the second BRAS.

39. A computer storage medium having stored therein a computer-executable instruction, the computer-executable instruction being configured to execute the Broadband Remote Access Server, BRAS, management method of any one of claims 1-9, or the message forwarding method of any one of claims 10-15, or the BRAS management method of any one of claims 16-19.
